# EUROPÄISCHE PATENTSCHRIFT

(11) **EP 2 659 009 B1**
(45) Veröffentlichungstag und Bekanntmachung des Hinweises auf die Patenterteilung: **28.02.2018**
(21) Anmeldenummer: 11817466.3
(22) Anmeldetag: 15.12.2011
(51) Int. Cl.: C21C 5/46, F16L 19/02

(54) **MEHRFACH GESICHERTE KOPPELVORRICHTUNG FÜR SAUERSTOFFLANZEN**
MULTIPLY SECURED COUPLING DEVICE FOR OXYGEN LANCES
DISPOSITIF D'ACCOUPLEMENT À SÉCURITÉ MULTIPLE POUR DES LANCES À OXYGÈNE

(30) Priorität: 28.12.2010 DE 102010056153; 18.03.2011 DE 102011014323
(43) Veröffentlichungstag der Anmeldung: 06.11.2013
(73) Patentinhaber: BEDA Oxygentechnik Armaturen GmbH, 40885 Ratingen (DE)
(72) Erfinder: BAYER, Reinhardt, 47269 Duisburg (DE)
(74) Vertreter: Schulte, Jörg
(86) Internationale Anmeldenummer: PCT/DE2011/002127
(87) Internationale Veröffentlichungsnummer: WO 2012/089188

(56) Entgegenhaltungen:
- EP-A2- 0 456 377
- DE-A1-102008 012 554
- DE-B3-102009 005 940
- JP-A- 1 159 513
- JP-U- 58 132 335

## Beschreibung

Die Erfindung betrifft eine mehrfach gesicherte Koppelvorrichtung für Sauerstofflanzen und andere, leicht entzündliche Gase führenden und diese Medien in die Stahlschmelze injizierende Rohre, wobei diese über einen als Ventil ausgebildeten Lanzenhalter und ein Sicherheitsrohr verfügen, das zwischen dem Lanzenhalter und einem zum Versorger führenden Lanzenschlauch angeordnet oder direkt mit dem Versorger verbunden ist.

Ein Brennrohrhalter bzw. eine Sauerstofflanze mit Lanzenhalter ist beispielsweise aus der EP 0 372 099 B1 bekannt. Am Sauerstoffeingang dieses Lanzenhalters ist allerdings nur ein Gewinde angedeutet, auf welches ein hier nicht gezeigtes Sicherheitsrohr aufgeschraubt wird. Solche meist aus Edelstahl bestehende Sicherheitsrohre oder Sicherheitsstrecken sind bei handbetätigten Lanzenhaltern hilfreich und dienen vor allem der Erhöhung der Betriebssicherheit, weil über sie die einwandfreie Führung der entzündlichen Gase vor allem des Sauerstoffs bis in den Lanzenhalter erreicht werden soll. Schwierig ist es allerdings, wenn bei der Koppelvorrichtung zwischen der Sauerstofflanze und der Sicherheitsstrecke bzw. dem Sicherheitsrohr unachtsam gehandelt und die Koppelvorrichtung nicht fest genug angezogen wird, weil dann das Austreten des leicht entzündlichen Gases doch auftreten kann. Von daher ist es wichtig, dass die Koppelvorrichtung immer fest angezogen ist, um die Dichtheit der Verbindung zu garantieren. Bei Unachtsamkeit ist allerdings die beschriebene Gefährdung nach wie vor vorhanden. Auch bei der EP 0 456 377 A2 ist der Dichtring dem Steckteil zugeordnet und weist eine schräge Dichtfläche auf. Die JP 58 132335 weist einen Brenner auf, der Zufuhrkanäle für Sauerstoff und Brenngas aufweist. Auch die EP 1 159 513 A betrifft einen solchen Brenner. In der DE 10 2009 005 940 B3 wird ein Montagesystem gelehrt, bei dem Bauteile über eine Überwurfmutter miteinander verbunden werden. Die DE 10 2008 012 534 A1 hat einen Lanzenhalter zum Gegenstand, der mit einem Lanzenschlauch oder einem Sicherheitsrohr verbunden werden kann.

Der Erfindung liegt daher die Aufgabe zugrunde, eine Koppelvorrichtung für Sauerstoff führende Versorgungsleitungen in Stahlwerken zu schaffen, bei der gefährliche Leckagen annähernd vermieden, nach Möglichkeit sogar gänzlich ausgeschlossen sind.

Die Aufgabe wird gemäß der Erfindung dadurch gelöst, dass das Sicherheitsrohr ein in das Anschlussteil des Lanzenhalters einführbares Steckteil aufweist, das mit einer auf den Lanzenhalter aufschraubbaren Überwurfmutter die Koppelvorrichtung bildet und wie auch Anschlussteil und Überwurfmutter um ein Sicherheitsstück verlängert ist, das ein weites Einführen in das Anschlussteil ermöglichend und damit eine Dichtwirkung auch noch bei locker aufsitzender Überwurfmutter gewährleistend ausgebildet und einmal mit mindestens einer gegen das Anschlussteil des Lanzenhalters im Bereich von Dichtflächen dichtenden, dem freien Ende des Anschlussteils zugeordneten Ringdichtung und andererseits einem verlängerten Gewinde ausgerüstet ist wobei der der Ringdichtung zugeordnete Dichtflächenbereich der Dichtfläche am verlängerten Steckteil 33-50% des Dichtflächenbereiches ausmacht, der nur vom Anschlussteil und Steckteil gebildet ist.

Anschlussteil, Überwurfmutter und Steckteil sind um ein Sicherheitsstück verlängert ausgebildet, wobei der der Ringdichtung zugeordnete Dichtflächenbereich deutlich kürzer ist als der nur von Anschlussteil und Steckteil gebildete Dichtflächenbereich, sodass deutlich wird, welche Bemaßung des Sicherheitsstückes bei allen drei Bauteilen sich zweckmäßigerweise zu ergeben hat.Bei einer derart ausgebildeten Koppelvorrichtung zwischen Sauerstofflanze und Sicherheitsrohr ist auch dann die notwendige Sicherheit gewährleistet, wenn die Überwurfmutter nicht hundertprozentig angezogen ist. Dies erreicht die Erfindung dadurch, dass sowohl das Anschlussteil wie die Überwurfmutter wie auch das Steckteil verlängert sind, einmal um eine zusätzliche Dichtzone zu schaffen und zum anderen um bei der lockeren Anordnung der Überwurfmutter dennoch durch das verlängerte Steckteil und die zweckmäßig angebrachte Ringdichtung die notwendige Dichtheit des Systems zu gewährleisten. Die Ringdichtung ist so angeordnet, dass das Steckteil weit in das Anschlussteil des Lanzenhalters einführbar ist und die Ringdichtung erst am freien Ende des Anschlussteils angeordnet ist. Die Ringdichtung ist also auch dann immer noch wirksam, wenn das Steckteil um einen gewissen Bereich durch eine lockere Überwurfmutter aus dem Steckteil herausgezogen ist. Vorteilhaft ist darüber hinaus, dass in dem verlängerten Bereich des Steckteils bzw. im Bereich des Sicherheitsstücks eine zusätzliche Dichtfläche geschaffen ist, die das Austreten von leicht entzündlichem Gas zusätzlich erschwert bzw. unmöglich macht.

Zweckmäßig ist es gemäß der Erfindung, wenn die Ringdichtung von zwei in beabstandeten Ringnuten angeordneten O-Ringen gebildet ist wobei das Steckteil einen über die O-Ringe der Ringdichtung vorstehenden freien Dichtflächenbereich aufweist, der doppelt so groß ist wie der von den beiden O-Ringen überdeckte Dichtflächenbereich. Damit ist eine Maßangabe gegeben, die je nach Gegebenheiten zu verwirklichen ist, ohne dass es größerer Veränderungen bedarf und die beiden O-Ringe entfalten ihre Dichtwirkung in zwei hintereinander liegenden Dichtzonen und darüber hinaus in einem verlängerten Dichtflächenbereich.

Nach einer zweckmäßigen Ausführungsform der Erfindung ist vorgesehen, dass das Anschlussteil des Lanzenhalters als verlängertes Mutterteil dient und über die auf dem entsprechend verlängerten und als Vaterteil dienenden Steckteil des Sicherheitsrohres oder auch des Lanzenschlauches reibende Ringdichtung verfügend ausgebildet ist. Mit dieser besonderen Ausbildung ist es vorteilhaft möglich, mit dem verlängerten Vaterteil soweit in das verlängerte Mutterteil einzutauchen, dass wie schon weiter vorn erwähnt auch bei nicht ganz angezogener Überwurfmutter dennoch die notwendige Dichtheit gegeben ist. Außerdem ist ein Abkanten oder Abknicken in diesem Bereich durch das weite Ineinanderschieben beider Bauteile ausgeschlossen.

Nach einer weiteren zweckmäßigen Ausbildung ist vorgesehen, dass dem als Steckteil dienenden Vaterteil des Sicherheitsrohres die Überwurfmutter mit einem mit dem Außengewinde des Anschlussteils korrespondierenden Innengewinde zugeordnet ist. Da beide Gewindebereiche gleich lang und gleich geformt sind, kann mit der entsprechenden Überwurfmutter die notwendig sichere Verbindung zwischen Sicherheitsrohr und Lanzenhalter gewährleistet werden.

Ergänzend sieht die Erfindung hierzu vor, dass das Steckteil einen Stützring aufweist, gegen dessen als Dichtfläche ausgebildete Innenseite das freie Ende des Anschlussteils des Lanzenhalters über die auf dem Außengewinde verschiebbare Überwurfmutter anpressbar ist. Mit Hilfe dieser Weiterbildung ist es möglich, beim richtigen Anpressen der Überwurfmutter das Anschlussteil so gegen das Steckteil anzupressen, dass hier eine weitere Dichtzone entsteht. Dies ist von Vorteil, auch wenn dort kein gesonderter Dichtring angeordnet ist, weil die aufeinander angepassten Flächen eine entsprechende Dichtwirkung entwickeln können.

Weiter vorne ist darauf hingewiesen worden, dass die Ringdichtung so im Anschlussteil des Lanzenhalters also im verlängerten Mutterteil angeordnet ist, dass eine Dichtwirkung auch dann noch vorhanden ist, wenn bei locker aufsitzender Überwurfmutter das Steckteil etwas aus dem Anschlussteil herausgezogen ist. Dies wird wie in Anspruch 1 festgelegt dadurch sichergestellt, dass die Ringdichtung dem freien Ende des Anschlussteils zugeordnet ist und zwar möglichst weit am freien Ende, um so die besagte Sicherung der Verbindung möglichst lange aufrecht zu erhalten.

Am anderen Ende des Sicherheitsrohres ist der Lanzenschlauch mit dem Sicherheitsrohr verbunden. Auch hier wird eine höhere Sicherheit dadurch erreicht, dass das Sicherheitsrohres ein dem Anschlussteil des Lanzenhalters entsprechend ausgebildetes Gegenanschlussteil aufweist. Auch der Lanzenschlauch erhält dementsprechend ein Steckteil, das dem Steckteil des Sicherheitsrohres entspricht, sodass damit eine ebenso vorteilhafte Verbindung möglich ist, wie mit dem Lanzenhalter.

Eine weitere Dichtzone erhält die vorliegende Erfindung dadurch, dass im Tiefsten des Anschlussteils des Lanzenhalters ein zugleich als Anschlag für das Steckteil dienender Ringsteg ausgebildet ist. Damit kann mit Beaufschlagung der Überwurfmutter zugleich die im Tiefsten liegende Dichtzone abgedichtet werden und die im Bereich des Stützringes, sodass zusammen mit der Ringdichtung praktisch vier Dichtzonen vorhanden sind, die für die vorteilhafte Dichtwirkung der Koppelvorrichtung von Nutzen sind.

Die Überwurfmutter selbst ist ebenso verlängert ausgebildet, wie das Steckteil und das Anschlussteil, wobei nach einer vorteilhaften Ausbildung vorgesehen ist, dass die Überwurfmutter zehn bis zwanzig Gewindegänge aufweisend ausgebildet ist, während übliche Überwurfmuttern lediglich fünf bis sieben Gewindegänge aufweisen. Damit ist verdeutlicht, dass auch über das längere Gewinde eine zusätzliche Sicherheit gegeben ist, da auch bei einer leicht gelockerten Überwurfmutter immer noch ausreichendes Gewinde vorhanden ist, um eine Abtrennung und damit ein völliges Undichtwerden auszuschließen.

Vorteilhaft ist es insbesondere, wenn die Überwurfmutter 15 Gewindegänge aufweisend ausgebildet ist.

Eine dauerhafte leichte Herstellung der Verbindung zwischen Lanzenhalter und Sicherheitsrohr über die Koppelvorrichtung ist insbesondere gegeben, wenn die Überwurfmutter aus Messing und das Steckteil wie auch das übrige Sicherheitsrohr aus Edelstahl hergestellt sind. Die Überwurfmutter aus dem weniger harten Metall kann somit leichtgängig auf das ebenfalls aus Edelstahl bestehende Anschlussteil des Lanzenhalters aufgeschraubt werden.

Neben den schon erwähnten insgesamt vier Dichtzonen ergibt sich eine fünfte Dichtzone im Bereich zwischen Steckteil und Mutterteil des Lanzenhalters dadurch, dass das Steckteil des Sicherheitsrohres und das Mutterteil des Lanzenhalters zusammen einen Sicherheitsschaft ergebend ausgeführt sind, der über eine durchgehend dichtende Ringfläche verfügt. Dieser Sicherheitsschaft hat also nicht nur die Aufgabe eine höhere Stabilität vorzugeben, sondern auch eine durchgehende Dichtfläche, die ergänzend sicherstellt, dass keinerlei leicht entzündliche Gase diesen Bereich durchfließen können.

Eine weitere Dichtzone ist zwischen Stützring und freiem Ende des Anschlussteils geschaffen und zwar ohne gesonderten Dichtring. Nach einer zweckmäßigen Ausführungsform ist die am Stützring bestehende Dichtfläche am Stützring metallisch dicht ausgebildet, sodass Metall auf Metall liegt. Diese vorteilhafte Dichtung erreicht die Erfindung vor allem dadurch, dass die Dichtfläche vom Flächengrund ausgehend nach außen schräg gestellt ist und dabei eine Neigung von vorzugsweise 5° aufweist. Schließlich wird in dieser Schräge eine Dichtkante durch Abbruch der Schräge geschaffen, sodass eine besonders intensive Dichtung geschaffen ist, die als weitere Dichtzone wirkt.

Die Erfindung zeichnet sich insbesondere dadurch aus, dass eine mehrfach gesicherte Koppelvorrichtung zwischen Lanzenhalter und dem anschließenden Lanzenschlauch geschaffen ist, die von erheblichem Vorteil ist, wenn zwischen Lanzenhalter und Lanzenschlauch ein Sicherheitsrohr oder eine Sicherheitsstrecke vorgesehen ist. Dieses Sicherheitsrohr verfügt beidseitig über ein die Gesamtlänge vergrößerndes Sicherheitsstück mit Dichtfläche bzw. Gewinde, sodass bei Ineinanderführen von Sicherheitsrohr und Anschlussteil des Lanzenhalters eine völlige Abdichtung dieser Koppelvorrichtung erreicht wird. Die notwendige Dichtheit ist auch dann gewährleistet, wenn durch Unachtsamkeit die Überwurfmutter nicht fest angezogen ist, wobei weitere fünf Dichtzonen diese Dichtheit unterstützen. Gerade bei dem hier angesprochenen Arbeitsgebiet, wo leicht entzündliche Gase in die Stahlschmelze injiziert werden, ist diese absolute Dichtigkeit der Verbindungsstelle enorm vorteilhaft. Außerdem genügt die Koppelvorrichtung dem besonderen Problem des dauerhaft hohen Druckes des Sauerstoffes oder sonstigen Gases im Bereich des Lanzenhalters.

Weitere Einzelheiten und Vorteile der Erfindung ergeben sich aus der nachfolgenden Beschreibung der zugehörigen Zeichnungen, in denen ein bevorzugtes Ausführungsbeispiel mit den dazu notwendigen Einzelheiten und Einzelteilen dargestellt ist. Es zeigen:
- Figur 1: einen Schnitt durch einen Lanzenhalter und dem noch nicht angekoppelten Sicherheitsrohr,
- Figur 2: den Schnitt gemäß Figur 1 mit angekoppeltem Sicherheitsrohr,
- Figur 3: einen vergrößerten Ausschnitt der Koppelverbindung nach Figur 1 vordem Ankoppeln,
- Figur 4: einen vergrößerten Ausschnitt der Koppelverbindung nach Figur 2 nach dem Ankoppeln,
- Figur 5: einen vergrößerten Schnitt des Sicherheitsrohres mit zurückgeschobener Überwurfmutter und
- Figur 6: einen Schnitt mit der eine weitere Dichtzone erbringenden Dichtkante.

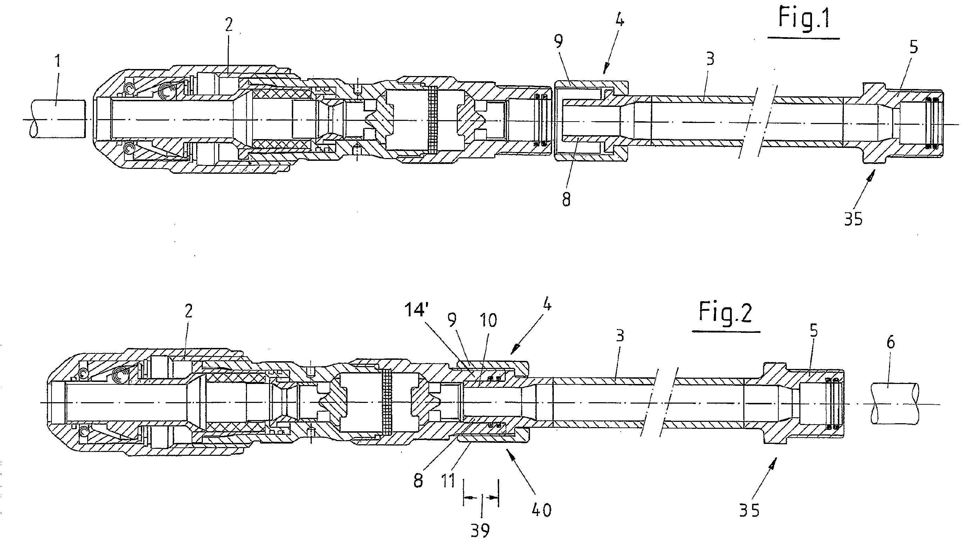

Von der eigentlichen Sauerstofflanze 1 ist in Figur 1 nur ein Teilbereich zu sehen. Diese Sauerstofflanze 1 bzw. das entsprechende Rohr wird in den Lanzenhalter 2 eingeschoben und dort wirksam festgelegt. Auf der gegenüberliegenden Seite dieses Lanzenhalters 2 ist ein Sicherheitsrohr 3 mit dem Anschlussteil 18 des Lanzenhalters 2 verbunden. Dies erfolgt über die Koppelvorrichtung 4, die aus dem Steckteil 8 des Sicherheitsrohres 3 sowie der Überwurfmutter 9 besteht. Die Überwurfmutter 9 wird auf das Anschlussteil 18 des Lanzenhalters 2 aufgeschraubt. Auf der gegenüberliegenden Seite des Sicherheitsrohres 3 ist die gleiche Koppelvorrichtung 5 vorgesehen, mit der das Sicherheitsrohr 3 mit einem Lanzenschlauch 6 verbunden wird.

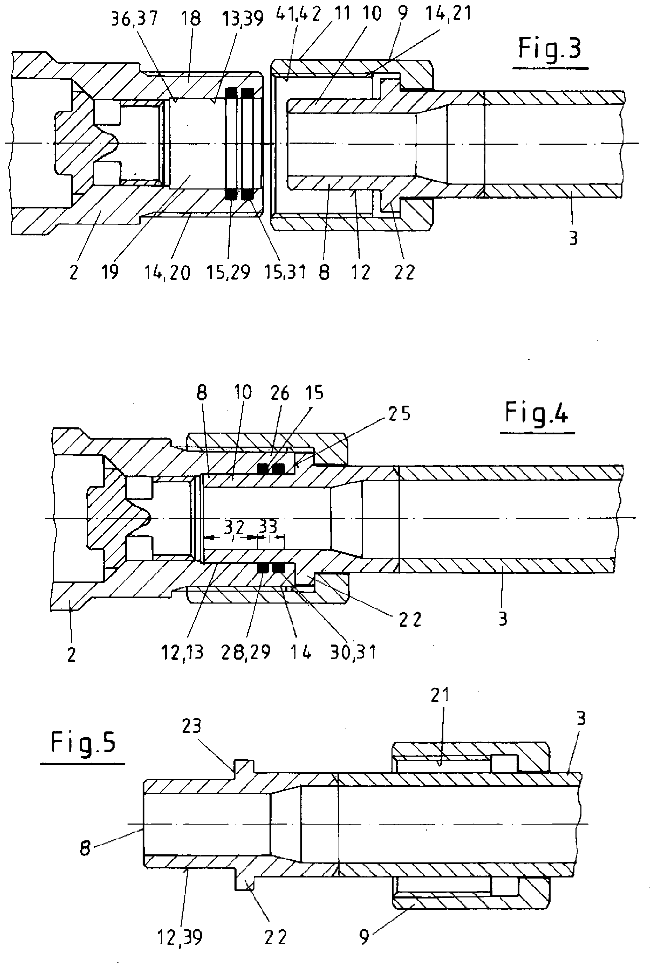

Sowohl das Steckteil 8 der Koppelvorrichtung 4 wie auch das Anschlussteil 18 und letztlich auch die Überwurfmutter 9 verfügen über ein zusätzliches Sicherheitsstück 10, 11, sodass damit insgesamt ein verlängerter Sicherheitsschaft 40 verwirklicht wird. Dieser Sicherheitsschaft 40 verfügt über eine Ringfläche 39, die praktisch eine erste Dichtzone darstellt. In Figur 3 sind daher die Außenfläche des Sicherheitsstücks 10 bzw. des Steckteils 8 mit dem Bezugszeichen 12 als Dichtfläche bezeichnet, ebenso wie die Innenfläche des Anschlussteils 18 des Lanzenhalters 2 mit dem Bezugszeichen 13. Liegen diese Dichtflächen 12, 13 wie in Figur 4 dargestellt aufeinander, ergibt sich so eine vorteilhaft lange Dichtzone.

Aus den Figuren 1 und 2 ist zu entnehmen, dass auch das Gegenanschlussstück 35 des Sicherheitsrohres 3 so ausgebildet ist, wie das gegenüberliegende Ende des Lanzenhalters 2, nämlich wie das Anschlussteil 18. Im Tiefsten 36 dieses Anschlussstückes 35 ist ein Ringsteg 37 ausgebildet, der als Anschlag für das eingeführte oder einzuführende Steckteil 8 des Sicherheitsrohres 3 dient aber gleichzeitig auch als Dichtzone, weil hier über die Überwurfmutter 9 ein entsprechend hoher Anpressdruck erzeugt werden kann. Die verlängerte Überwurfmutter 9 korrespondiert mit ihrem Innengewinde 21 mit dem Außengewinde 20 des Lanzenhalters 2 bzw. dessen Anschlussteil 18, was man insbesondere auch Figur 3 entnehmen kann. Außengewinde 20 und Innengewinde 21 ergeben das Gewinde 14, über das die Überwurfmutter 9 über insgesamt rund fünfzehn Gewindegänge 41, 42 auf dem Anschlussteil 18 entlang verschoben werden kann, um die einzelnen Dichtzonen zu verwirklichen.

Dabei wird auch die Dichtfläche 25 aktiviert und zwar die am freien Ende 26 des Anschlussteils 18, das hier mit dem Stützring 22 bzw. dessen Innenfläche 23 korrespondiert, sodass damit die erwähnte Dichtzone verwirklicht werden kann.

Figur 1 zeigt die noch nicht geschlossene und Figur 2 die geschlossene Koppelvorrichtung 4.

Die wesentliche Dichtung erreicht man über die Ringdichtung 15 am freien Ende 26 des als Mutterteil 19 ausgebildeten Anschlussteils 18. Bei der in den Figuren 1 bis 5 gezeigten Ausführung ist diese Ringdichtung 15 durch zwei beabstandete Ringnuten 28, 30 mit O-Ringen 29, 31 verwirklicht, wobei diese beiden O-Ringe 29, 31 jeweils eine optimale Dichtzone bilden. Dadurch bleibt die Hauptdichtwirkung auch dann existent, wenn die Überwurfmutter 9 nicht richtig angezogen ist oder sich gelockert hat, sodass sich das Steckteil 8 um einen gewissen Betrag aus dem Mutterteil 19 herausgezogen hat. Vorteilhaft ist es, wenn die von den O-Ringen überdeckte Dichtflächenbereich 33 am Steckteil 8 bei etwa 33 bis 50% der Dichtflächenbereich 32 ausmacht, die nur vom Mutterteil 19 bzw. Steckteil 8 gebildet sind. Entsprechendes ist in Figur 4 verdeutlicht, wobei hier die verlängerten Sicherheitsstücke mit den Bezugszeichen 10, 11 und 14' versehen sind. Das Sicherheitsstück 10 gehört zum Steckteil 8, das Sicherheitsstück 11 zur Überwurfmutter 9 und das Sicherheitsstück 14' zum Anschlussteil 18.

Figur 5 verdeutlicht, dass die Überwurfmutter 9 leicht zu verschieben ist. Sie ist hier sehr weit zurückgeschoben dargestellt, um das Steckteil 8 am vorderen Ende des Sicherheitsrohres 3 zu zeigen. Es ist verlängert ausgebildet, weist eine als Dichtfläche 12 wirkende Ringfläche 39 auf und erbringt die erwähnte Mehrfachsicherung sowohl bezüglich der Dichtung wie auch bezüglich Stabilität (Abknicksicherung). All dies ist auch deshalb von großer Bedeutung, weil auch bei geschlossenem Ventil im Lanzenhalter 2 in diesem Bereich leicht entzündliches Gas mit hohem Druck ansteht.

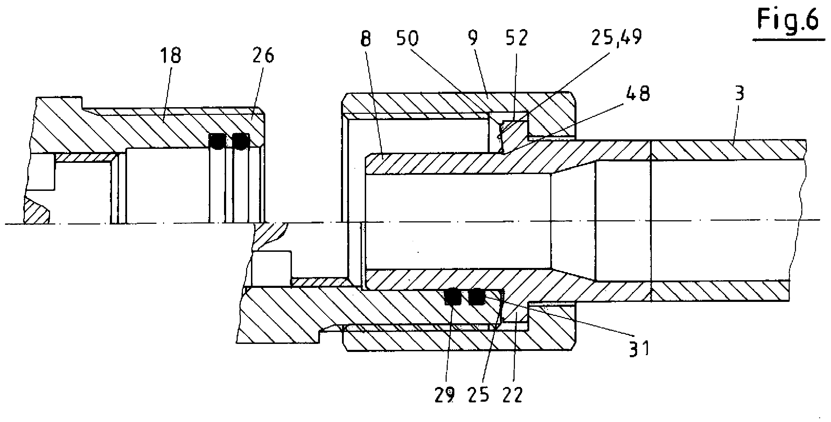

Figur 6 schließlich zeigt die zusätzliche Dichtzone im Bereich der Innenseite des Stützringes 22. Im oberen Teilbereich mit dem aus der Überwurfmutter 9 herausgezogenen Vaterventil 8 ist erkennbar, dass die Innenseite des Stützringes 22 eine Schräge 49 bildet und zwar eine vom Flächengrund 48 zum Außenrand 52 des Stützringes 22 hoch führende Schräge 49. Diese die Dichtfläche 25 bildende Schräge 49 ist kurz vor dem Außenrand 52 abgebrochen, sodass eine Dichtkante 50 entsteht. Da die Schräge 49 unter einem Winkel von ∼ 5° zur Senkrechten steht, wirkt die Dichtkante 50 bei der Dichtung der beiden aus Metall bestehenden Teile vorteilhaft unterstützend.

Zusammenfassend wird noch einmal darauf hingewiesen, dass bei der erfindungsgemäßen Koppelvorrichtung vier bzw. auch insgesamt fünf Dichtzonen verwirklicht werden, die dafür sorgen, dass bei optimaler Koppelvorrichtung aber auch bei gelockerter Koppelvorrichtung immer noch die notwendige Dichtung gegeben ist, die das Austreten der leicht entzündlichen Gase insbesondere des Sauerstoffs unterbinden. Eine Dichtzone ist dort verwirklicht, wo das Steckteil 8 gegen den Ringsteg 37 stößt. Die zweite Dichtzone und die dritte Dichtzone liegen im Bereich der O-Ringe 29 und 31, wobei diese auch beim Herausziehen des Steckteils 8 erhalten bleibt, so dass eine Mehrfachsicherung erreicht ist. Die vierte Dichtzone wird beim Anpressen des Stützringes 22 an die Vorderkante des Anschlussteils 18 bzw. Mutterteils 19 verwirklicht, während die fünfte Dichtzone von den beiden Dichtflächen 12, 13 bzw. Ringfläche 39 gebildet wird. Damit ist eine optimal sichere Verbindung von Lanzenhalter 2 und Sicherheitsrohr 3 bzw. gegebenenfalls auch Lanzenschlauch 6 immer gegeben.

Alle genannten Merkmale, auch die den Zeichnungen allein zu entnehmenden, werden allein und in Kombination als erfindungswesentlich angesehen.

## Patentansprüche

1. Mehrfach gesicherte Koppelvorrichtung (4) für Sauerstofflanzen (1) und andere, leicht entzündliche Gase führenden und diese Medien in die Stahlschmelze injizierende Rohre, wobei diese über ein Ventil, in Form eines Lanzenhalters (2) und ein zwischengeschaltetes Sicherheitsrohr (3), und die Koppelvorrichtung (4,5) mit einem zum Versorger führenden Lanzenschlauch (6) verbunden ist, **dadurch gekennzeichnet,**
**dass** das Sicherheitsrohr (3) ein in das Anschlussteil (18) des Lanzenhalters (2) einführbares Steckteil (8) aufweist, das mit einer auf den Lanzenhalter (2) aufschraubbaren Überwurfmutter (9) die Koppelvorrichtung (4) bildet und wie auch Anschlussteil (18) und Überwurfmutter (9) um ein Sicherheitsstück (10, 11, 14') verlängert ist, das ein weites Einführen in das Anschlussteil (18) ermöglichend und damit eine Dichtwirkung auch noch bei locker aufsitzender Überwurfmutter (9) gewährleistend ausgebildet und einmal mit mindestens einer gegen das Anschlussteil (18) des Lanzenhalters (2) im Bereich von Dichtflächen (12, 13) dichtenden, dem freien Ende (26) des Anschlussteils (18) zugeordneten Ringdichtung (15) und andererseits einem verlängerten Gewinde (14) ausgerüstet ist, wobei der der Ringdichtung (15) zugeordnete Dichtflächenbereich (33) der Dichtfläche (12, 13) am verlängerten Steckteil (8) 33-50% des Dichtflächenbereiches (32) ausmacht, die nur vom Anschlussteil (18) und Steckteil (8) gebildet ist.

2. Koppelvorrichtung nach Anspruch 1,
**dadurch gekennzeichnet,**
**dass** die Ringdichtung (15) von zwei in beanstandeten Ringnuten (28, 30) angeordneten O-Ringen (29, 31) gebildet ist.

3. Koppelvorrichtung nach Anspruch 1,
**dadurch gekennzeichnet**
**dass** das Anschlussteil (18) des Lanzenhalters (2) als verlängertes Mutterteil (19) dient und über die auf dem entsprechend verlängerten und als Vaterteil dienenden Steckteil (8) des Sicherheitsrohres (3) oder auch des Lanzenschlauches (6) reibende Ringdichtung (15) verfügend ausgebildet ist.

4. Koppelvorrichtung nach Anspruch 1,
**dadurch gekennzeichnet,**
**dass** dem als Steckteil (8) dienenden Vaterteil des Sicherheitsrohres (3) die Überwurfmutter (9) mit einem mit dem Außengewinde (20) des Anschlussteils (18) korrespondierenden Innengewinde (21) zugeordnet ist.

5. Koppelvorrichtung nach Anspruch 4,
**dadurch gekennzeichnet,**
**dass** das Steckteil (8) einen Stützring (22) aufweist, gegen dessen als Dichtfläche (25) ausgebildete Innenseite das freie Ende (26) des Anschlussteils (18) des Lanzenhalters (2) über die auf dem Außengewinde (20) verschiebbare Überwurfmutter (9) anpressbar ist.

6. Koppelvorrichtung nach einem der vorhergehenden Ansprüche,
**dadurch gekennzeichnet,**
**dass** das Sicherheitsrohr (3) ein dem Anschlussteil (18) des Lanzenhalters (2) entsprechend ausgebildetes Gegenanschlussteil (35) aufweist.

7. Koppelvorrichtung nach einem der vorhergehenden Ansprüche,
**dadurch gekennzeichnet,**
**dass** im Tiefsten (36) des Anschlussteils (18) des Lanzenhalters (2) ein zugleich als Anschlag für das Steckteil (8) dienender Ringsteg (37) ausgebildet ist.

8. Koppelvorrichtung nach einem der vorhergehenden Ansprüche,
**dadurch gekennzeichnet,**
**dass** die Überwurfmutter (9) zehn bis zwanzig Gewindegänge (41, 42) aufweisend ausgebildet ist.

9. Koppelvorrichtung nach Anspruch 8,
**dadurch gekennzeichnet,**
**dass** die Überwurfmutter (9) fünfzehn Gewindegänge (41, 42) aufweisend ausgebildet ist.

10. Koppelvorrichtung nach einem der vorhergehenden Ansprüche,
**dadurch gekennzeichnet,**
**dass** die Überwurfmutter (9) aus Messing und das Steckteil (8) wie auch das übrige Sicherheitsrohr (3) aus Edelstahl hergestellt sind.

11. Koppelvorrichtung nach einem der vorhergehenden Ansprüche,
**dadurch gekennzeichnet,**
**dass** das Steckteil (8) des Sicherheitsrohres (3) und das Mutterteil (19) des Lanzenhalters (2) zusammen einen Sicherheitsschaft (40) ergebend ausgeführt sind, der über eine durchgehend dichtende Ringfläche (39) verfügt.

12. Koppelvorrichtung nach Anspruch 5,
**dadurch gekennzeichnet,**
**dass** die Dichtfläche (25) am Stützring (22) metallisch dicht ausgebildet ist.

13. Koppelvorrichtung nach Anspruch 12,
**dadurch gekennzeichnet**
**dass** die Dichtfläche (25) vom Flächengrund (48) ausgehend nach außen schräg gestellt und dabei eine Neigung von 5° zur Senkrechten aufweisend ausgebildet ist.

14. Koppelvorrichtung nach Anspruch 13,
**dadurch gekennzeichnet**
**dass** die Schräge (49) der Dichtfläche (25) kurz vor dem Außenrand (52) des Stützringes (22) eine Dichtkante (50) bildend abgebrochen ausgeführt ist.

## Claims

1. Multiply secured coupling device (4) for oxygen lances (1) and other pipes transporting highly flammable gases and injecting these media into the steel melt, whereby this is connected by means of a valve in the form of a lance holder (2) and an intermediate safety pipe (3), and the coupling device (4, 5) to a lance tube (6) leading to the supplier,
**characterised in that**
the safety pipe (3) has a plug-in (8) that can be inserted into the connecting part (18) of the lance holder (2), which forms the coupling device (4) with a union nut (9) screwable onto the lance holder (2) and, like the connecting part (18) and the union nut (9), is extended by a safety part (10, 11, 14') that is designed to enable further introduction into the connecting part (18), thus guaranteeing a sealing effect even when the union nut (9) is sitting loosely, and fitted on the one hand with at least one ring seal (15) sealing against the connecting part (18) of the lance holder (2) in the area of sealing surfaces (12, 13), assigned to the free end (26) of the connecting parts (18), and on the other hand with an extended thread (14), whereby the sealing surface area (33) of the sealing surface (12, 13) assigned to the (15) at the extended plug-in (8) makes up 33-50% of the sealing surface area (32) that is formed only by the connecting part (18) and plug-in (8).

2. Coupling device in accordance with Claim 1,
**characterised in that**
that the ring seal (15) is formed by two O-rings (29, 31) arranged in spaced circumferential grooves (28, 30).

3. Coupling device in accordance with Claim 1,
**characterised in that**
that the connecting part (18) of the lance holder (2) serves as extended female connection (19) and is formed having a friction seal ring (15) over the correspondingly extended plug-in (8) of the safety pipe (3) or of the lance hose (6) serving as a male connection.

4. Coupling device in accordance with Claim 1,
**characterised in that**
that the union nut (9) with an inside thread (21) corresponding to the outside thread (20) of the connecting part (18) is assigned to the male connection of the safety pipe (3) serving as plug-in (8).

5. Coupling device in accordance with Claim 4,
**characterised in that**
the plug-in (8) has a support ring (22) against whose inside formed as a sealing surface (25) the free end (26) of the connecting part (18) of the lance holder (2) can be pressed through the union nut (9) that can be moved on the outside thread (20).

6. Coupling device in accordance with one of the above claims
**characterised in that**
the safety pipe (3) has a counter connecting part (35) formed correspondingly to the connecting part (18) of the lance holder (2).

7. Coupling device in accordance with one of the above claims
**characterised in that**
an annular projection (37) is formed in the deepest part (36) of the connecting part (18) of the lance holder (2) serving at the same time as a stopper for the plug-in (8).

8. Coupling device in accordance with one of the above claims
**characterised in that**
that the union nut (9) is formed having ten to twenty threads (41, 42).

9. Coupling device in accordance with Claim 8,
**characterised in that**
that the union nut (9) is formed having fifteen threads (41, 42).

10. Coupling device in accordance with one of the above claims
**characterised in that**
that the union nut (9) is made of brass and the plug-in (8) as well as the remainder of the safety pipe (3) are made of stainless steel.

11. Coupling device in accordance with one of the above claims
**characterised in that**
that the plug-in (8) of the safety pipe (3) and female part (19) of the lance holder (2) are implemented together to form a safety shaft (40) having a continuously sealing ring face (39).

12. Coupling device in accordance with Claim 5,
**characterised in that**
that the sealing surface (25) at the support ring (22) is formed to create a metallic seal.

13. Coupling device in accordance with Claim 12,
**characterised in that**
that the sealing surface (25) is slanted starting from the surface base (48) to the outside having an inclination of 5° to the vertical.

14. Coupling device in accordance with Claim 13,
**characterised in that**
that the inclination (49) of the sealing surface (25) is interrupted shortly before the outer edge (52) of the support ring (22) forming a sealing edge (50).

## Revendications

1. Dispositif de couplage (4) sécurisé plusieurs fois pour lances à oxygène (1) et autres tuyaux destinés à conduire des gaz facilement inflammables et à injecter ces fluides dans un bain d'acier en fusion, sachant ces lances et tuyaux sont reliés à une flexible lance (6) menant au dispositif d'alimentation par l'intermédiaire d'une vanne en forme de support de lance (2), d'un tuyau de sécurité (3) intercalé et du dispositif de couplage (4, 5),
**caractérisé par le fait**
**que** le tuyau de sécurité (3) présente un élément enfichable (8) pouvant être introduit dans la pièce de raccordement (18) du support de lance (2), qui constitue le dispositif de couplage (4) avec un écrou de raccord (9) pouvant être vissé sur le support de lance (2) et qui est, tout comme la pièce de raccordement (18) et l'écrou de raccord (9), prolongé par une pièce de sécurité (10, 11, 14') qui permet une large introduction dans la pièce de raccordement (18) en étant ainsi formée de manière à assurer un effet d'étanchéité, même lorsque l'écrou de raccord (9) repose de façon encore lâche et est équipé d'une part d'au moins un joint annulaire (15) assurant l'étanchéité vis-à-vis de la pièce de raccordement (18) du support de lance (2) dans la zone des surfaces d'étanchéité (12, 13) et attribué à l'extrémité libre (26) de la pièce de raccordement (18), et est par ailleurs équipé d'un filetage prolongé (14), sachant que la zone des surfaces d'étanchéité (33) de la zone d'étanchéité (12, 13) attribuée au joint annulaire (15) représente sur l'élément enfichable (8) 33-50% de la zone des surfaces d'étanchéité (32), qui est seulement formée de la pièce de raccordement (18) et de l'élément enfichable (8).

2. Dispositif de couplage selon la revendication 1,
**caractérisé par le fait**
**que** le joint annulaire (15) est constitué de deux joints toriques (29, 31) disposés dans deux bagues élastiques (28, 30) situées à une certaine distance l'une de l'autre.

3. Dispositif de couplage selon la revendication 1,
**caractérisé par le fait**
**que** la pièce de raccordement (18) du support de lance (2) sert de pièce femelle (19) prolongée et est formée de manière à être mise à disposition par l'intermédiaire de l'élément enfichable (8) du tuyau de sécurité(3) servant de pièce mâle ou bien également du joint annulaire (15) frottant du flexible lance (6).

4. Dispositif de couplage selon la revendication 1,
**caractérisé par le fait**
**qu'**à la pièce mâle du tuyau de sécurité (3) servant d'élément enfichable (8) est attribué l'écrou de raccord (9) avec un filetage intérieur (21) correspondant au filetage extérieur (20) de la pièce de raccordement (18).

5. Dispositif de couplage selon la revendication 4,
**caractérisé par le fait**
**que** l'élément enfichable (8) présente une bague d'appui (22) contre la face intérieure constituée en tant que zone d'étanchéité (25) de laquelle l'extrémité libre (26) de la pièce de raccordement (18) du support de lance (2) peut être pressée par l'intermédiaire de l'écrou de raccord (9) pouvant être déplacé sur le filetage (20).

6. Dispositif de couplage d'après une des revendications précédentes,
**caractérisé par le fait**
**que** le tuyau de sécurité (3) présente une pièce complémentaire (35) à la pièce de raccordement (18) du support de lance (2) formée en conséquence.

7. Dispositif de couplage d'après une des revendications précédentes,
**caractérisé par le fait**
**qu'**au point le plus profond (36) de la pièce de raccordement (18) du support de lance (2) est formée une barre annulaire (37) servant simultanément de butée pour l'élément enfichable (8).

8. Dispositif de couplage d'après une des revendications précédentes,
**caractérisé par le fait**
**que** l'écrou de raccord (9) est constitué en présentant dix à vingt pas de filetage (41, 42).

9. Dispositif de couplage selon la revendication 8,
**caractérisé par le fait**
**que** l'écrou de raccord (9) est constitué en présentant quinze pas de filetage (41, 42).

10. Dispositif de couplage d'après une des revendications précédentes,
**caractérisé par le fait**
**que** l'écrou de raccord (9) est fabriqué en laiton et que l'élément enfichable (8), tout comme le reste du tuyau de sécurité (3) est fabriqué en acier fin.

11. Dispositif de couplage d'après une des revendications précédentes,
**caractérisé par le fait**
**que** l'élément enfichable (8) du tuyau de sécurité (3) et la pièce femelle (19) du support de lance (2) sont constitués de façon à former ensemble une tige de sécurité (40) qui dispose d'une surface annulaire (39) assurant l'étanchéité de part en part.

12. Dispositif de couplage selon la revendication 5,
**caractérisé par le fait**
**que** la zone d'étanchéité (25) sur la bague d'appui (22) est constituée sous une forme métallique et étanche.

13. Dispositif de couplage selon la revendication 12,
**caractérisé par le fait**
**que** la zone d'étanchéité (25) est réalisée en biais vers l'extérieur en partant de la base de la surface (48), en présentant ainsi une inclinaison de 5° par rapport à la verticale.

14. Dispositif de couplage selon la revendication 13,
**caractérisé par le fait**
**que** la partie en biais (49) de la zone d'étanchéité (25) est réalisée de façon à constituer un bord d'étanchéité (50) peu avant le bord extérieur (52) de la bague d'appui (22).
